(19) **Europäisches Patentamt European Patent Office Office européen des brevets**

(11) **EP 3 971 839 B1**

(12) **EUROPEAN PATENT SPECIFICATION**

(45) Date of publication and mention of the grant of the patent:
**22.04.2026 Bulletin 2026/17**

(21) Application number: **20810793.8**

(22) Date of filing: **06.05.2020**

(51) International Patent Classification (IPC):
***G06T 15/50*** *(2011.01)*

(52) Cooperative Patent Classification (CPC):
**G06T 15/506**

(86) International application number:
**PCT/CN2020/088629**

(87) International publication number:
**WO 2020/233396 (26.11.2020 Gazette 2020/48)**

(54) **ILLUMINATION RENDERING METHOD AND APPARATUS, STORAGE MEDIUM, AND ELECTRONIC APPARATUS**

BELEUCHTUNGSDARSTELLUNGSVERFAHREN UND -VORRICHTUNG, SPEICHERMEDIUM UND ELEKTRONISCHE VORRICHTUNG

PROCÉDÉ ET APPAREIL DE RENDU D'ÉCLAIRAGE, SUPPORT DE STOCKAGE ET APPAREIL ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2019 CN 201910413385**

(43) Date of publication of application:
**23.03.2022 Bulletin 2022/12**

(73) Proprietor: **Tencent Technology (Shenzhen) Company Limited**
**Shenzhen, Guangdong, 518057 (CN)**

(72) Inventor: **WEI, Zhixiao**
**Shenzhen, Guangdong 518057 (CN)**

(74) Representative: **Novagraaf International SA**
**Chemin de l'Echo 3**
**1213 Onex, Geneva (CH)**

(56) References cited:
CN-A- 103 021 020    CN-A- 104 008 563
CN-A- 106 504 315    CN-A- 107 204 029
CN-A- 110 288 692    US-A1- 2015 325 041
US-A1- 2018 122 090

• **SAMULI LAINE ET AL: "Incremental Instant Radiosity for Real-Time Indirect Illumination", EUROGRAPHICS SYMPOSIUM ON RENDERING, 23 May 2007 (2007-05-23), pages 277 - 286, XP055224535, Retrieved from the Internet <URL:http://www.nvidia.ca/docs/IO/67074/laine2007egsr_paper.pdf> [retrieved on 20151029], DOI: 10.2312/EGWR/EGSR07/277-286**
• **DAMEZ C ET AL: "State of the art in global illumination for interactive applications and high-quality animations", COMPUTER GRAPHICS FORUM : JOURNAL OF THE EUROPEAN ASSOCIATION FOR COMPUTER GRAPHICS, WILEY-BLACKWELL, OXFORD, vol. 21, no. 4, 1 March 2003 (2003-03-01), pages 55 - 77, XP002361903, ISSN: 0167-7055, DOI: 10.1111/1467-8659.T01-1-00646**
• **DANIEL SCHERZER ET AL: "Temporal Coherence Methods in Real-Time Rendering", COMPUTER GRAPHICS FORUM : JOURNAL OF THE EUROPEAN ASSOCIATION FOR COMPUTER GRAPHICS, WILEY-BLACKWELL, OXFORD, vol. 31, no. 8, 4 September 2012 (2012-09-04), pages 2378 - 2408, XP071487832, ISSN: 0167-7055, DOI: 10.1111/J.1467-8659.2012.03075.X**

**Description**

FIELD OF THE TECHNOLOGY

The present disclosure relates to the field of computers, and particularly, to an illumination rendering technology.

BACKGROUND OF THE DISCLOSURE

In the conventional technology, before a virtual object in a virtual three-dimensional scene is displayed, real-time global illumination rendering is generally required to be performed on the virtual object in the virtual three-dimensional scene, and the rendered object in the virtual scene is then displayed.
The patent application No. US2015325041A1 relates to an image processing method which includes determining a number of virtual point light (VPL) samplings for each area of a current frame, applying VPLs sampled in a previous frame to the current frame, adjusting a result of the applying based on the determined number of VPL samplings, and rendering the current frame based on VPLs sampled in the current frame.
The prior art document LAINE ET AL: "Incremental Instant Radiosity for Real-Time Indirect Illumination" presents a method for rendering single-bounce indirect illumination in real time on currently available graphics hardware. The method is based on the instant radiosity algorithm, where virtual point lights (VPLs) are generated by casting rays from the primary light source. Hardware shadow maps are then employed for determining the indirect illumination from the VPLs. The contribution is an algorithm for reusing the VPLs and incrementally maintaining their good distribution. As a result, only a few shadow maps need to be rendered per frame as long as the motion of the primary light source is reasonably smooth. This yields real-timeframe rates even when hundreds of VPLs are used.
However, rendering the virtual object in the three-dimensional scene in real time requires complex steps, and consumes a large amount of resources, so that the method of global illumination rendering provided in the conventional technology has a low rendering efficiency.
For the foregoing problem, no effective solution has been proposed yet.

SUMMARY

There are provided an illumination rendering method and apparatus, a storage medium, an electronic device, and a computer program product according to the appended claims, to resolve at least the technical problem in the conventional technology of a low efficiency of global illumination rendering on a virtual object in a virtual three-dimensional scene.
According to an aspect of the present invention, an illumination rendering method as set out in claim 1 is provided.
According to another aspect of the present invention, an illumination rendering apparatus as set out in claim 9 is further provided.
According to still another aspect of the present invention, a storage medium as set out in claim 10 is further provided.
According to still another aspect of the present invention, an electronic device as set out in claim 11 is further provided. According to still another aspect of the invention, a computer program product as set out in claim 12 is provided.
In the embodiments of the present invention, according to the provided method, since the first picture at the target viewing angle is directly obtained from the virtual three-dimensional scene, and the illumination rendering is performed on the first picture according to the target virtual light source point set of the first picture, it is unnecessary to render the virtual object in the virtual three-dimensional scene. Main light source points that render the virtual object can be obtained rapidly, thereby improving the efficiency of rendering a virtual object in a virtual three-dimensional scene, and thus resolving the technical problem in the conventional technology of the low efficiency of global illumination rendering on the virtual object in the virtual three-dimensional scene.

BRIEF DESCRIPTION OF THE DRAWINGS

The accompanying drawings described herein are used for providing a further understanding of the present disclosure, and form part of the present disclosure. Exemplary embodiments of the present disclosure and descriptions thereof are used for interpreting the present disclosure, and do not constitute any inappropriate limitation to the present disclosure. In the accompanying drawings:

FIG. 1 is a schematic diagram of an application environment of an optional illumination rendering method according to an embodiment of the present disclosure;
FIG. 2 is a schematic flowchart of an optional illumination rendering method according to an embodiment of the present disclosure;

FIG. 3 is a schematic diagram of an optional illumination rendering method according to an embodiment of the present disclosure;

FIG. 4 is a schematic diagram of another optional illumination rendering method according to an embodiment of the present disclosure;

FIG. 5 is a schematic diagram of still another optional illumination rendering method according to an embodiment of the present disclosure;

FIG. 6 is a schematic diagram of still another optional illumination rendering method according to an embodiment of the present disclosure;

FIG. 7 is a schematic flowchart of another optional illumination rendering method according to an embodiment of the present disclosure;

FIG. 8 is a schematic diagram of still another optional illumination rendering method according to an embodiment of the present disclosure;

FIG. 9 is a schematic structural diagram of an optional illumination rendering apparatus according to an embodiment of the present disclosure; and

FIG. 10 is a schematic structural diagram of an optional electronic device according to an embodiment of the present disclosure.

DESCRIPTION OF EMBODIMENTS

In order to make a person skilled in the art better understand the solutions of the present disclosure, the following clearly and completely describes the technical solutions in the embodiments of the present invention with reference to the accompanying drawings in the embodiments of the present invention Apparently, the described embodiments are only some of the embodiments of the present invention rather than all of the embodiments. All other embodiments obtained by a person of ordinary skill in the art based on the embodiments of the present invention without creative efforts fall within the protection scope of the present invention, which is set out by the appended claims.

It should be noted that, the terms "first", "second", and so on in this specification, the claims, and the accompanying drawings of the present disclosure are intended to distinguish similar objects but do not necessarily indicate a specific order or sequence. It should be understood that, the data used in this way may be interchanged in an appropriate case, so that the embodiments of the present disclosure described herein can be implemented in a sequence other than the sequence illustrated or described herein. Moreover, the terms "include", "contain" and any other variants mean to cover the non-exclusive inclusion. For example, a process, method, system, product, or device that includes a series of steps or units is not necessarily limited to those expressly listed steps or units, but may include other steps or units not expressly listed or inherent to such a process, method, system, product, or device.

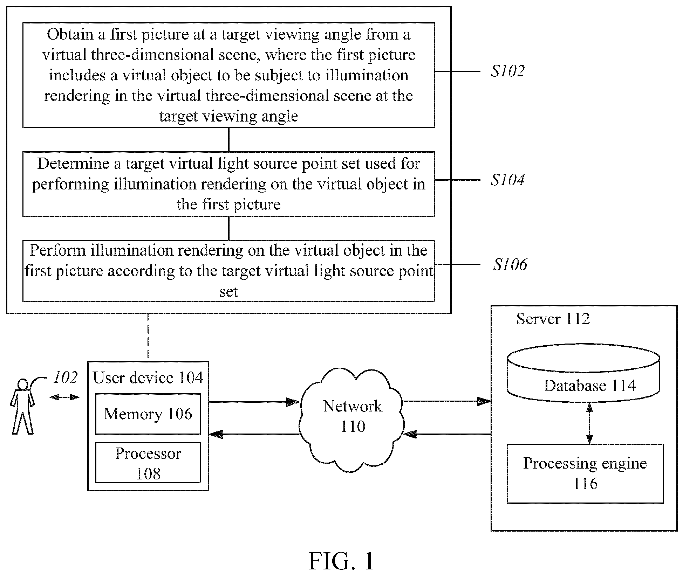

According to an aspect of the embodiments of the present disclosure, an illumination rendering method is provided. Optionally, in an optional implementation, the illumination rendering method is applicable to, but is not limited to, an environment shown in FIG. 1.

In FIG. 1, a user 102 may perform man-machine interaction with a user device 104. The user device 104 includes a memory 106 configured to store interaction data and a processor 108 configured to process the interaction data. The user device 104 may perform data interaction with a server 112 via a network 110. The server 112 includes a database 114 configured to store interaction data and a processing engine 116 configured to process the interaction data. A virtual three-dimensional scene is run in the user device 104. The user device 104 performs illumination rendering on a first picture by performing a method including the following operations of obtaining a first picture at a target viewing angle, determining a target virtual light source point set of the first picture and rendering a virtual object in the first picture by using the target virtual light source point set, which are shown in step S102 to step S106, instead of performing global illumination rendering on the virtual object in the virtual three-dimensional scene, thereby improving efficiency of illumination rendering on the virtual three-dimensional scene.

Optionally, the illumination rendering method is applicable to, but is not limited to, terminals that can perform calculation of data, for example, terminals such as a mobile phone, a tablet computer, a laptop computer, and a PC machine. The network may include, but is not limited to, a wireless network or a wired network. The wireless network includes: a Wireless Fidelity (WIFI) network and other networks implementing wireless communication. The wired network may include, but is not limited to, a wide area network, a metropolitan area network, and a local area network. The server may include, but is not limited to, any hardware device that is capable of performing calculation.

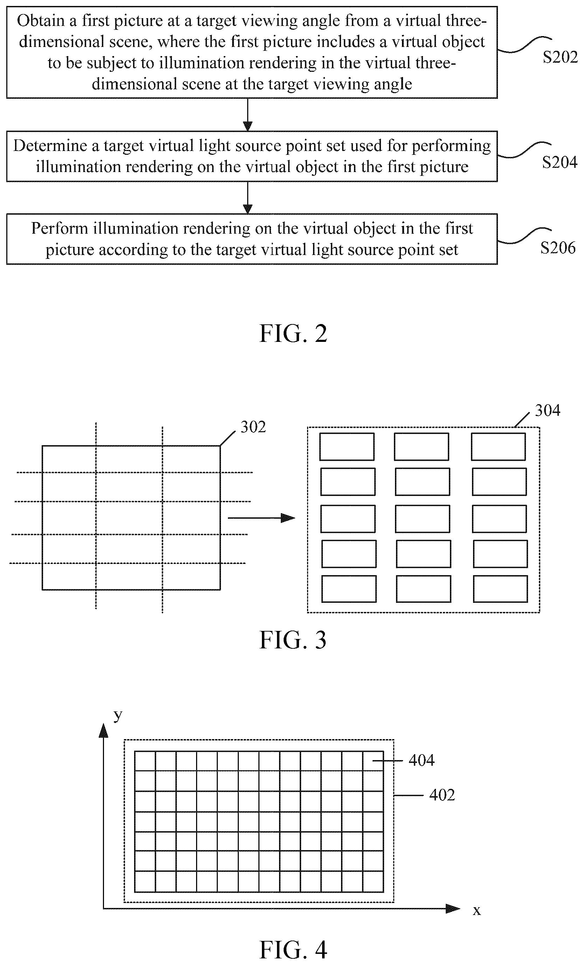

In accordance with the present invention, as shown in FIG. 2, the illumination rendering method includes the following steps S202 to S206.

In S202, a first picture at a target viewing angle is obtained from a virtual three-dimensional scene. The first picture includes a virtual object to be subject to illumination rendering in the virtual three-dimensional scene at the current viewing angle.

In S204, a target virtual light source point set used for performing illumination rendering on the virtual object in the first picture is determined.

In S206, illumination rendering is performed on the virtual object in the first picture according to the target virtual light source point set.

Optionally, the illumination rendering method is applicable to, but is not limited to, a process of performing illumination rendering on a virtual three-dimensional scene, for example, a process of performing illumination rendering on a virtual three-dimensional scene in a game, a process of performing illumination rendering on a virtual three-dimensional scene in virtual training, or a process of performing rendering on a virtual three-dimensional scene in virtual shopping.

The following description is made by using an example in which illumination rendering is performed on a virtual three-dimensional scene in a game. During the game, the virtual three-dimensional scene is run in the game. The virtual three-dimensional scene includes a virtual object to be subject to global illumination rendering. In the conventional technology, a real-time calculation is generally required to be performed based on an illumination effect on the virtual object in the virtual three-dimensional scene by a virtual light source in the virtual three-dimensional scene, to obtain a calculation result, and global illumination rendering is performed on the virtual object. However, this method requires a large calculation amount, and has a low efficiency in global illumination rendering on the virtual three-dimensional scene. In this embodiment, the first picture at the target viewing angle is obtained from the virtual three-dimensional scene, the target virtual light source point set used for performing illumination rendering on the virtual object in the first picture is determined, and illumination rendering is performed on the virtual object in the first picture by using the target virtual light source point set. In this way, the illumination rendering is performed only on the first picture, instead of performing real-time rendering on the virtual three-dimensional scene, thereby reducing the calculation amount during rendering, and improving the efficiency of rendering the virtual three-dimensional scene.

In accordance with the present invention, for determining the target virtual light source point set, the first picture may be divided into multiple sub-pictures, an original virtual light source point set of each sub-picture is determined, and original virtual light source point sets of the sub-pictures are combined, to obtain the target virtual light source point set in which all light source points are different from each other.

FIG. 3 is a schematic diagram of dividing the first picture in accordance with the present invention. As shown in FIG. 3, a first picture 302 is divided into multiple sub-pictures 304. Each white rectangular box in FIG. 3 represents one sub-picture.

In accordance with the present invention, for determining the original virtual light source point set of each sub-picture, an associated pixel of each pixel in the sub-picture is required to be determined so as to determine the original virtual light source point set.

An associated pixel set of the sub-picture may be determined by using multiple methods. In accordance with the present invention, the associated pixel set of the sub-picture may be determined by the following processes. Each pixel in the sub-picture is determined as a first pixel. For each first pixel, a pixel that is closest to the first pixel and has a depth smaller than a depth of the first pixel in each of four directions, namely, up, down, left, and right, of the first pixel, is determined as a second pixel. A second pixel with a minimum depth among second pixels respectively determined for the four directions is determined as an associated pixel of the first pixel. Associated pixels of all pixels in the sub-picture are combined to obtain the associated pixel set of the sub-picture, where the associated pixel set includes repeated pixels.

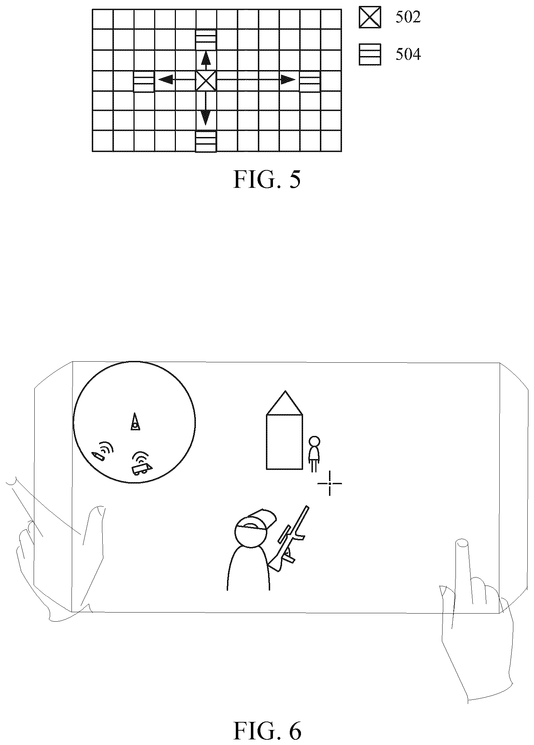

The following description is given by taking a sub-picture as an example. As shown in FIG. 4, a sub-picture 402 is placed in a rectangular plane coordinate system, and each pixel 404 in the sub-picture corresponds to four directions, namely, a positive x direction, a positive y direction, a negative x direction, and a negative y direction. If the positive x direction is the right by default and the positive y direction is the up by default, each pixel corresponds to the four directions, including up, down, left, and right. Each pixel in the sub-picture is determined as a first pixel. In each of the four directions, namely, up, down, left, and right, of the first pixel, a pixel closest to the first pixel, for example, an adjacent pixel is traversed, and a depth of the adjacent pixel of the first pixel is determined. If the depth of the adjacent pixel is less than the depth of the first pixel, traversal in this direction stops. If the depth of the adjacent pixel is greater than the depth of the first pixel, traversal in this direction continues, until a pixel having a depth less than the depth of the first pixel is traversed in each direction. Reference is made to FIG. 5, which is a schematic diagram showing second pixels 504 obtained by traversal in the four directions for a first pixel 502. A value is required to be set in the traversal. In each of the four directions, the traversal stops after a specified quantity of pixels are traversed even if no second pixel is traversed. In a case that no second pixel is traversed, the first pixel is determined as the second pixel. After the second pixels are traversed, a second pixel with a minimum depth is determined as an associated pixel of the first pixel.

In accordance with the present invention, after associated pixels of all the pixels in the sub-picture are determined, the associated pixels of all the pixels are combined into an associated pixel set, where the associated pixel set includes repeated associated pixels. First M pixels that appear the most frequently in the associated pixel set are determined to form an original virtual light source point set of the sub-picture. After original virtual light source point sets of all the sub-pictures are obtained, the original virtual light source point sets of all the sub-pictures are combined into a light source point set in which all light source points are different from each other, the light source point set obtained after combining is determined as the target virtual light source point set of the first picture, and illumination rendering is performed on the virtual object in the first picture by using the target virtual light source point set of the first picture.

Optionally, in this embodiment, target virtual light source points of the first picture are determined once at a predetermined time interval. If the first picture is a $J^{th}$ picture in a picture set, where J is an integer greater than 1, a time at which a processed picture (for example, a $(J-1)^{th}$ picture) in a previous frame of the first picture is obtained and a time at which the first picture is obtained are determined. If a difference between the two times is less than a first threshold, a target virtual light source point set of the processed picture in the previous frame of the first picture is determined as the target virtual light source point set of the first picture, to reduce a calculation amount of a system.

If the difference between the two times is greater than or equal to the first threshold, an original virtual light source point set of each sub-picture in the first picture is determined, and original virtual light source point sets of all the sub-pictures are combined, to obtain a target virtual light source point set in which all light source points are different from each other.

Optionally, after the target virtual light source point set of the first picture is obtained, illumination rendering may be performed on the virtual object in the first picture by using the target virtual light source point set of the first picture. During rendering, for each pixel in the first picture, an illumination result of the pixel by the target virtual light source point set is calculated. After illumination results of all the pixels in the first picture by the target virtual light source point set are obtained, an illumination map recording an illumination value for each pixel is obtained. After the illumination map of the first picture is obtained, the illumination map is superimposed with a color map of the first picture, to obtain a mixed picture. The mixed picture is a picture obtained after illumination rendering is performed on the first picture.

Optionally, in a process that an illumination result of a pixel by the target virtual light source point set is calculated, for each pixel in the first picture, the pixel is determined as a third pixel, and the following operations are performed until illumination results of all pixels in the first picture are determined. For example, a first illumination value of a pixel (for example, the third pixel) by each virtual light source point in the target virtual light source point set is calculated, and first illumination values of the third pixel by all the virtual light source points in the target virtual light source point set are accumulated, to obtain a sum of first illumination values of the pixel by all the target virtual light source points in the target virtual light source point set. The obtained sum is determined as an illumination result of the pixel by the target virtual light source point set.

Optionally, in the method, illumination rendering is performed on the first picture by using the target virtual light source points in the target virtual light source point set. In another embodiment, after the target virtual light source point set of the first picture is obtained, the target virtual light source point set is processed to obtain a first virtual light source point set, and the first picture is rendered by using the first virtual light source point set.

Optionally, the foregoing processing process is performed in the following manner. After the target virtual light source point set of the first picture is obtained, target virtual light source point sets of all processed pictures before the first picture may be obtained. For example, during rendering, each first picture and multiple rendered pictures before the first picture are determined to form a picture set. A specific picture quantity of the picture set may be set. The first picture is a last picture in the picture set. A target virtual light source point set of each picture in the picture set is determined by using the foregoing method. A weight is set for each picture in the picture set. Then, for each pixel in the target virtual light source point set of the first picture, the target virtual light source point sets of all the pictures in the picture set are traversed. If the pixel is located in a target virtual light source point set of a picture in the picture set, a weight of the picture is obtained. After all the target virtual light source point sets in the picture set are traversed, all obtained weights are accumulated, to obtain a weight of the pixel in the target virtual light source point set of the first picture. Weights of all the pixels in the first picture may be obtained by using the foregoing method. First K pixels with the largest weight are determined to form a second virtual light source point set of the first picture. N pixels in the second virtual light source point set of the first picture are replaced with N pixels in a first virtual light source point set of a processed picture in a previous frame of the first picture, and the second virtual light source point set formed after replacement is determined as the first virtual light source point set of the first picture. The first picture is rendered by using the first virtual light source point set. The first picture obtained after being rendered with this method is more stable than a first picture obtained after being directly rendered by the target virtual light source points, avoiding flickering of the picture in a time series.

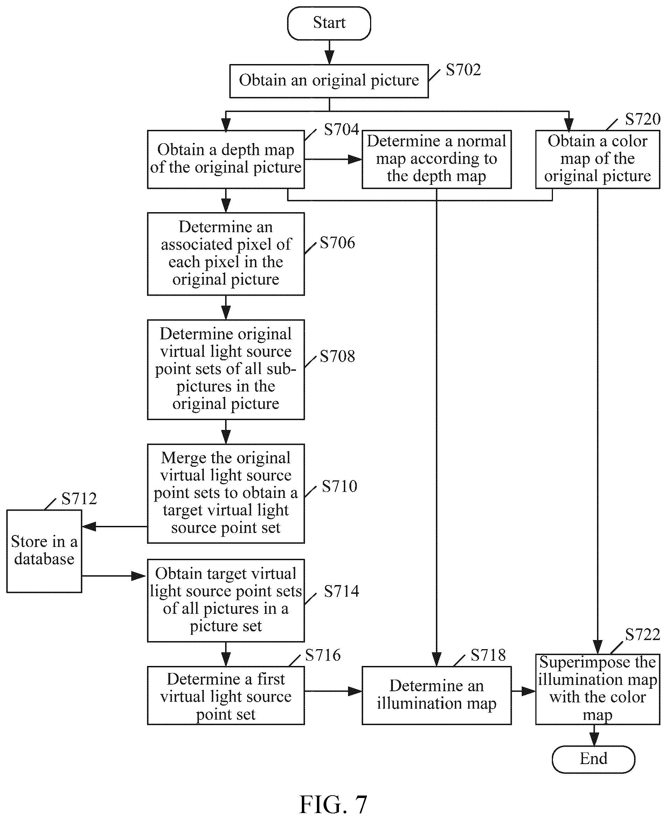

The above illumination rendering method is described below with reference to a game scene. Reference is made to FIG. 6, which shows an optional display interface of a game. A virtual three-dimensional scene is run in the game. In this solution, a picture in the virtual three-dimensional scene is rendered before the picture is displayed on a client, instead of performing real-time illumination rendering on a virtual object run in the game, in the virtual three-dimensional scene. A to-be-rendered picture is referred to as an original picture in the following, that is, a first picture. The following description is made with reference to step S702 to step S722 in FIG. 7.

The following formulas are predefined.

    1. abs(x) represents an absolute value of x.

2. p2w(x, y, z) represents a 2 dimensional (3D) position in a scene world, to which a point with coordinates (x, y) and a depth of z on a two-dimensional (2D) image corresponds.

3. normalize(x) represents an operation calculating a normalized vector of a vector x.

4. cross(x, y) represents an operation calculating a cross-product vector of vectors x and y.

5. depth(x, y) represents a depth distance between a position in a 3D scene, to which a point with coordinates (x, y) on a 2D image corresponds, and an observation position, which is also referred to as a pixel depth.

6. Indirect(px, py, x, y) represents indirect light illumination on a scene position corresponding to coordinates (x, y) on a 2D image by a scene position corresponding to coordinates (px, py) on the 2D image.

7. length(v) represents an operation calculating a length of a vector v.

8. dot(x, y) represents an operation performing a dot product calculation on vectors x and y to obtain a dot product result.

A color map, a depth map, and a normal map of the original picture are obtained after the original picture is obtained. The color map of the original picture records a color value of each pixel in the original picture. The depth map of the original picture records a depth of each pixel in the original picture. The depth map and the color map may be automatically obtained when the original picture is exported from a system, and a specific interpretation thereof is not provided herein. The normal map records a normal value of each pixel in the original picture.

Optionally, the normal map is determined according to the depth map by performing the following processes.

It is assumed that, a normal value at a pixel position (x, y) is indicated as N(x, y), and a depth at the pixel position obtained from the depth map is indicated as D(x, y), where D(x, y) is known data.

It is assumed that c = D(x, y), L = D(x-1, y), r = D(x+1, y), u = D(x, y+1), and d = D(x, y-1).

In the case of abs(c-L) < abs(c-r), minLr = abs(c-L), otherwise, minlr = abs(c-r).

In the case of abs(c-u) < abs(c-d), minud = abs(c-u), otherwise, minud = abs(c-d).

It is assumed that Mid = p2w(x, y, c), Right = p2w(x+1, y, c+minLr)-Mid, and Top = p2w(x, y+1, c+minud)-Mid. In this case, N(x, y) = normalize(cross(Right, Top)).

Where c, L, r, u, d, minLr, minud, Mid, Right, and Top are defined variables, and are used for interpreting a calculation process.

The normal map of the original picture is obtained by the foregoing method. The normal map and the color map of the original picture are standby.

After the original picture is obtained, a target virtual light source point set of the original picture is required to be determined, which may be implemented by performing the following operations.

An associated pixel of each pixel in the original picture is calculated. It is assumed that coordinates of a pixel in the original picture are indicated as (x, y). The calculation process is performed by using a resolution with a width of N1*W and a height of N2*H (where N1 and N2 are generally less than 1, to improve a calculation efficiency of this process). It is assumed that a position of an associated pixel of the pixel (x, y) is indicated as (Uvpl(x, y), Vvpl(x, y)). W represents a width of the original picture, and H represents a height of the original picture. The calculation process is described as follows.

1. Firstly, a depth depth(x, y) of the pixel (x, y) is calculated. In the case of depth(x, y) > G, the following steps 2 to 4 are skipped, and it is set that (Uvpl(x, y), Vvpl(x, y)) = (0, 0); otherwise the process proceeds. G is a preset control parameter.

2. Traversal is performed for each pixel (px, py) in each of the four directions, namely, a positive x direction, a negative x direction, a positive y direction, and a negative y direction, to perform the following operations.

3. If the depth depth(px, py) of the pixel is less than the depth depth(x, y) of the pixel (x, y), the pixel (px, py) is considered as a pixel closer to the observation position than the pixel (x, y), or a point that can generate indirect illumination on the pixel (x, y) at the current observation position (at the target viewing angle), and the pixel (px, py) is set as a second pixel of the pixel (x, y) in this direction, and the traversal in this direction stops; otherwise, a next pixel in the given direction is continuously traversed, and a maximum quantity of pixels traversed does not exceed a predetermined quantity.

4. A largest second pixel (Pmaxx, Pmaxy) in the four directions is found, and it is set that (Uvpl(x, y), Vvpl(x, y)) = (Pmaxx, Pmaxy). If no second pixel is found in the four directions, it is set that (Uvpl(x, y), Vvpl(x, y)) = (0, 0).

The associated pixel of each pixel in the original picture is obtained through the above steps 1 to 4.

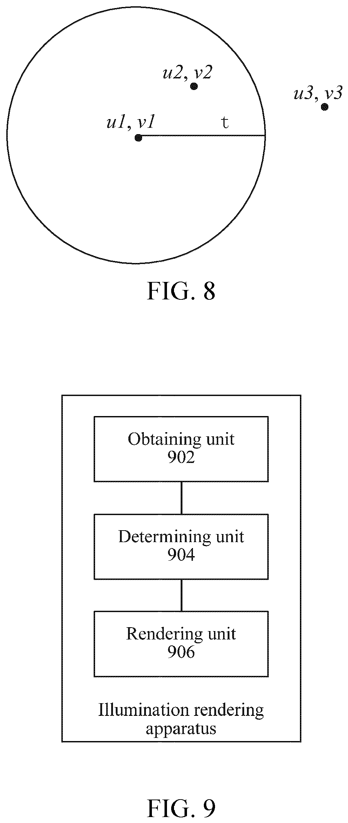

After the associated pixel of each pixel in the original picture is obtained, the original picture is uniformly divided into sub-pictures each with a length of Gw and a width of Gh. That is, each sub-picture includes (W/Gw, H/Gh) pixels. W and H respectively represent a length and a width of the original picture, and Gw and Gh both are integers greater than 1. For each sub-picture, positions of the associated pixels found in the previous step respectively for all the pixels in the sub-picture are traversed, to obtain a set S of positions of associated pixels, M positions that appear the most frequently in S are determined through statistics to obtain an original virtual light source point set Sn. Positions of associated pixels included in Sn are set as the most important indirect light sources affecting the sub-picture. When performing statistics on S to obtain indirect light source positions that appear the most frequently, a second threshold t is required to be set, so that two positions (u1, v1) and (u2, v2) spaced apart by a distance t in the 2D space are considered as a same position (u1, v1). As shown in FIG. 8, when a first position (u1, v1) is obtained through statistics, a circle with (u1, v1) as an origin and t as a radius is set as an associated region of (u1, v1). During statistics, when another point, for example, (u2, v2) located within the associated region of (u1, v1) is found, the number of times of counting (u1, v1) is added by 1, rather than determining (u2, v2) as a new point for statistics. Further, in a case of another point, for example, (u3, v3), which is located outside the associated region of (u1, v1), (u3, v3) is used as a new point for statistics. If a point is located within associated regions of both the point (u1, v1) and the point (u3, v3), the number of times of counting (u1, v1) is increased in a case that the point is closer to (u1, v1) than (u3, v3), and the number of times of counting (u3, v3) is increased in a case that the point is closer to (u3, v3). Finally, all the original virtual light source point sets Sn of all the sub-pictures of the original picture are combined into a target virtual light source point set sf in which all elements are different from each other.

After the target virtual light source point set is determined, the original picture may be rendered by using the target virtual light source point set. To ensure that the rendering process is more stable, the target virtual light source point set is processed in this embodiment, to obtain a first virtual light source point set, and the original picture is rendered by using the first virtual light source point set. The first virtual light source point set is determined by the following operations.

Sf is added to a database Data, and calculation is performed based on historical information in the database and Sf to obtain Sf'. It is considered that Sf' can produce a smoother indirect illumination value in the time domain than Sf. The Sf' is obtained by obtaining a target virtual light source point set S ={Sf, Sf-1, Sf-2, ... Sf-h+1} of all frames in previous h frames from the database Data, where h is an integer greater than 1.

It is set that, Weights of all the previous frames is indicated as a set W={Wf, Wf-1, Wf-2, ... Wf-h+1}, and Sum(x, y) is a weight sum of a light source at coordinates (x, y). Each indirect light source E in {Sf, Sf-1, Sf-2, ... Sf-h+1} is traversed, to obtain a coordinate position (Xe, Ye) of E and a frame number i of a frame where E is located. Sum(Xe, Ye) is increased by a weight value W(i) in the weight set W corresponding to the i$^{th}$ frame each time an indirect light source is traversed. Finally, the weight sums Sum of all the coordinate positions are sorted in descending order, and first K coordinate positions are selected to form a second virtual light source point set Sf" of the original picture.

It is assumed that a first virtual light source point set of a processed picture in a previous frame of the original picture is indicated as Sf-1'. One-to-one mapping is performed on element positions in Sf" and Sf-1'. This mapping ensures a minimum sum of distances between each element and a mapped element in Sf' and Sf-1'. It is assumed that a k$^{th}$ element in Sf' is indicated as Pk, and an element mapped in Sf-1' thereof is indicated as Pk_match. All mapped element pairs (Pk, Pk_match) are sorted in ascending order based on 2D distances between elements in the element pairs, to find n element pairs (where n is a configurable constant) with the smallest distance, and n elements in Sf' are replaced with corresponding mapped elements in Sf-1' to obtain a new set, that is, the first virtual light source point set Sf' of the original picture.

After the first virtual light source point set of the original picture is obtained, illumination rendering is performed on the original picture by using the first virtual light source point set.

During illumination rendering, indirect illumination is performed on a current image by using the first virtual light source point set Sf'. For any first virtual light source point L in the set Sf', a color Lc, a position Lw in the virtual three-dimensional scene, and a normal Ln thereof may be learned from known image information, e.g., the color map, the depth map, and the normal map. For each pixel p in the original picture, a color pc, a position pw in the virtual three-dimensional scene, a normal pn thereof may be learned from the known color map, depth map, and normal map. It is assumed that an attenuation coefficient of a point source is indicated as c. In the case of depth(p) <= a third threshold, indirect illumination is performed on each pixel p in the image by using the virtual light source point L, with a given illumination model M1 based on known information, to obtain an illumination result pi. An illumination model formula that is applicable is as follows:

$$Pi = Lc*dot(Ln, normalize(pw–lw))*dot(pn, normalize(lw–pw))/(c*length(pw–lw)).$$

Indirect illumination results of the pixel p by all indirect light sources in Sf' are accumulated to obtain an illumination result pi_sum, to finally obtain an illumination map of the original picture. The illumination map is superimposed with the color map of the original picture, to obtain a new rendered composite map. Then, in the game scene shown in FIG.

6, the rendered composite map is displayed on the client, to render the virtual three-dimensional scene of the game.

It should be noted that, in this embodiment, in a process that a first illumination value of a pixel in the original picture by a virtual light source point in the target virtual light source point set is calculated, the target virtual light source point may further be moved by a distance along an extension line connecting the pixel and the target virtual light source point, and the attenuation coefficient c of an illumination radiance of the point light source is decreased, so that the illumination effect of an area light source may be simulated by using the point light source, and the illumination quantity is improved.

In this embodiment, the first picture at the target viewing angle is obtained from the virtual three-dimensional scene, the target virtual light source point set of the virtual image in the first picture is determined, and illumination rendering is performed on the virtual image in the first picture by using the target virtual light source point set. In this way, illumination rendering is required to be performed only on the first picture, instead of performing real-time rendering on the virtual object in the virtual three-dimensional scene, thereby reducing the calculation amount during rendering, and improving the efficiency of rendering the virtual three-dimensional scene.

In accordance with the present invention, determining the target virtual light source point set used for performing illumination rendering on the first picture includes the following steps S1 and S2.

In S1, an original virtual light source point set of each sub-picture in the first picture is determined. The first picture includes multiple sub-pictures.

In S2, original virtual light source point sets of all the sub-pictures are combined to obtain the target virtual light source point set. All light source points in the target virtual light source point set are different from each other.

In accordance with the present invention, after the first picture is obtained, the first picture is divided into multiple sub-pictures, and original virtual light source point sets of all the sub-pictures are calculated. As shown in FIG. 3, the original picture 302 is divided into the multiple sub-pictures 304, original virtual light source point sets of all the sub-pictures 304 are calculated, and the original virtual light source point sets of all the sub-pictures are combined to obtain the target virtual light source point set.

In this embodiment, the first picture is divided into the multiple sub-pictures, and the original virtual light source point sets of all the sub-pictures are obtained and combined to obtain the target virtual light source point set. In this way, the target virtual light source points of the target virtual light source point set are relatively dispersed, and are not concentrated in a relatively small region of the original picture, thereby improving the accuracy of determining the target virtual light source points.

In accordance with the present invention, determining the original virtual light source point set of each sub-picture in the first picture includes the following steps S1 and S2.

In S1, for each sub-picture in the first picture, an associated pixel of each pixel in the sub-picture is determined, to obtain an associated pixel set of the sub-picture.

In S2, first M pixels that appear the most frequently in the associated pixel set are determined, to form the original virtual light source point set of the sub-picture, where M is an integer greater than zero.

Optionally, in a process that the associated pixel of each pixel is determined, if a depth of a current pixel is greater than a limit value, an associated pixel of the current pixel is required to be determined as (0, 0). If the depth of the current pixel is less than or equal to the limit value, pixels in each of the four directions, namely, up, down, left, and right, of the current pixel may be traversed, to determine the associated pixel of the current pixel.

In accordance with the present invention, in the process that the associated pixel set of the sub-picture is determined, several pixels that appear the most frequently among associated pixels of the pixels in the sub-picture are determined to form the original virtual light source point set, thereby resolving the problem of a large calculation amount caused by a large quantity of light source points that need to be calculated. In addition, because the several pixels that appear the most frequently, which are selected by using the foregoing method, are of high importance, the accuracy of determining the target virtual light source points is ensured.

In accordance with the present invention, determining the associated pixel of each pixel in the sub-picture to obtain the associated pixel set of the sub-picture includes the following steps S1 and S2.

In S1, for each pixel in the sub-picture, the pixel is determined as a first pixel, and the following operations is performed, including: determining, in each of four directions including up, down, left, and right, of the first pixel, a pixel that is closest to the first pixel and has a depth smaller than a depth of the first pixel as a second pixel, and determining a second pixel with a minimum depth among second pixels respectively determined in the four directions as an associated pixel of the first pixel.

In S2, associated pixels of all pixels in each sub-picture are combined into the associated pixel set of the sub-picture. The associated pixel set includes repeated pixels.

For example, when determining an associated pixel of each pixel, the pixels in the four directions, namely, up, down, left, and right, of the pixel are required to be traversed, and a pixel with a depth less than the depth of the pixel that is firstly traversed is determined as the second pixel of the pixel.

It should be noted that a a quantity of second pixels of a pixel may be zero to four. If the quantity of second pixels is zero, an associated pixel of the pixel is set to be (0, 0).

In this embodiment, the associated pixel of each pixel is traversed by using the foregoing method, so that an associated pixel that meets a condition can be traversed in a relatively short period of time without traversing all the pixels, thereby improving the efficiency of obtaining the associated pixel of each pixel.

In an optional implementation, determining the target virtual light source point set used for performing illumination rendering on the first picture includes the following steps S1 and S2.

In S1, in a case that a difference between a time at which the first picture is obtained and a time at which a (J-1)th processed picture is obtained is greater than or equal to a first threshold, an original virtual light source point set of each sub-picture in the first picture is determined. The first picture including multiple sub-pictures, the first picture IS a Jth picture in a picture set, and J is an integer greater than 1.

In S2, original virtual light source point sets of all the sub-pictures are combined to obtain the target virtual light source point set. All light source points in the target virtual light source point set are different from each other.

Optionally, in this embodiment, the first threshold is preset. The first threshold is used for controlling whether to calculate a target virtual light source point of the first picture. For example, ten pictures with an interval of 0.04s are to be rendered, and the first threshold is set as 0.2s. If a target virtual light source point of a first picture among the ten pictures is obtained, the target virtual light source point of the first picture is assigned to the first to fifth pictures. Then, a target virtual light source point of a sixth picture is determined, and the target virtual light source point of the sixth picture is assigned to the sixth to tenth pictures. That is, calculation is performed once every 0.2s, instead of performing calculation on each picture.

In this embodiment, by setting the first threshold, the target virtual light source point is calculated once every first threshold, thereby reducing the frequency of calculating the target virtual light source point, and improving the efficiency of determining the target virtual light source point.

In an optional implementation, determining the target virtual light source point set used for performing illumination rendering on the first picture further includes the following step S1.

In S1, in a case that the difference between the time at which the first picture is obtained and the time at which the (J-1)th processed picture is obtained is less than the first threshold, a target virtual light source point set of the (J-1)th processed picture is determined as the target virtual light source point set of the first picture. The first picture is the Jth picture in the picture set, and J is an integer greater than 1.

In this embodiment, by setting the first threshold, a target virtual light source point of a previous picture is directly assigned to the first picture if a time interval between the first picture and the previous picture is less than the first threshold, thereby improving the efficiency of determining the target virtual light source point.

In an optional implementation, performing illumination rendering on the first picture according to the target virtual light source point set includes the following steps S1 and S2.

In S1, an illumination result of each pixel in the first picture by the target virtual light source point set is obtained, to obtain an illumination map of the first picture. The illumination map records an illumination value for each pixel in the first picture.

In S2, the illumination map is superimposed with a color map of the first picture, to obtain a rendered first picture.

Optionally, after the target virtual light source point set is obtained, the illumination result of each pixel in the first picture is determined by using the target virtual light source point set, to obtain the illumination map of the first picture, and the illumination map is combined with the color map to determine the rendered first picture. When combining the illumination map with the color map, transparency of the illumination map is firstly adjusted and the adjusted illumination map is superimposed with the color map, or the illumination map is directly superimposed with the color map.

In this embodiment, the illumination map is superimposed with the color map, so that the first picture may be directly processed so as to implement illumination rendering on the virtual object in the virtual three-dimensional scene, thereby improving the efficiency of illumination rendering.

In an optional implementation, obtaining the illumination result of each pixel in the first picture by the target virtual light source point set includes the following steps S1 to S3.

In S1, for each pixel in the first picture, the pixel is determined as a third pixel, and the following operations are performed until illumination results of all pixels in the first picture are determined.

In S2, a first illumination value of the third pixel by each virtual light source point in the target virtual light source point set is determined.

In S3, first illumination values of the third pixel by all the virtual light source points in the target virtual light source point set are accumulated, to obtain an illumination result of the third pixel.

In this embodiment, first illumination values of a pixel by all target virtual light source points in the target virtual light source point set are determined, and the first illumination values are accumulated to obtain the illumination result of the pixel, improving the efficiency of obtaining the illumination map of the first picture.

In an optional implementation, the process of performing illumination rendering on the virtual object in the first picture according to the target virtual light source point set may be performed by performing the following step S1.

In S1, a target virtual light source point set of each processed picture before the first picture in a picture set is obtained, and a second virtual light source point set of the first picture is determined according to target virtual light source point sets of all picture in the picture set. The first picture is a last picture in the picture set. N pixels in the second virtual light source point set of the first picture are replaced with N pixels in a first virtual light source point set of a processed picture in a previous frame of the first picture, and the second virtual light source point set formed after replacement is determined as a first virtual light source point set of the first picture. Illumination rendering is performed on the virtual object in the first picture by using the first virtual light source point set of the first picture.

Optionally, in this embodiment, after the target virtual light source point set is obtained, the first picture is not processed directly using the target virtual light source point set. Instead, the first virtual light source point set of the first picture is obtained according to the target virtual light source point sets of all pictures in the picture set, and the first picture is processed by using the first virtual light source point set.

In this embodiment, the first virtual light source point set of the first picture is determined according to the target virtual light source point sets of all pictures in the picture set, and illumination rendering is performed on the first picture by using the first virtual light source point set, avoiding flickering during rendering.

In an optional implementation, determining the second virtual light source point set of the first picture according to the target virtual light source point sets of all pictures in the picture set includes the following steps S1 to S4.

In S1, a weight set for each processed picture in the picture set is obtained.

In S2, for each pixel in the target virtual light source point set of the first picture, a weight of a processed picture whose target virtual light source point set includes the pixel is obtained.

In S3, a sum of weights of processed pictures whose target virtual light source point set includes the pixel is obtained, to obtain a weight sum of each pixel in the target virtual light source point set of the first picture.

In S4, K pixels with the largest weight sum in the target virtual light source point set of the first picture are determined to form the second virtual light source point set of the first picture, where K is an integer greater than zero.

For example, there are three processed pictures before the first picture, which are respectively referred as to a processed picture 1, a processed picture 2, and a processed picture 3 according to a processing order, and weights for the three processed pictures are respectively set as 0.1, 0.3, and 0.6. For a pixel in the target virtual light source point set of the first picture, a target virtual light source point set of each of the processed pictures 1 to 3 is traversed. If the pixel is traversed, for example, the pixel is found in the target virtual light source point set of the processed picture 1, the weight 0.1 of the processed picture 1 is obtained. If the pixel is found in the target virtual light source point set of the processed picture 3, the weight 0.6 of the processed picture 3 is obtained. A sum of weights obtained in the above process is 0. 7. By using the method, weight sums of all pixels in the target virtual light source point set of the first picture are determined and are sorted, and several pixels with the largest weight sum are selected to form the second virtual light source point set. The first virtual light source point set of the first picture is determined according to a first virtual light source point set of the previous picture of the first picture and the second virtual light source point set of the first picture.

In this embodiment, the first virtual light source point set is determined by using the above method, ensuring the accuracy of determining the first virtual light source point set.

It should be noted that, for ease of description, the foregoing method embodiments are described as a combination of a series of actions. A person skilled in the art should understand that the present disclosure is not limited by the described action sequence, because some steps may be performed in another sequence or simultaneously according to the present disclosure. In addition, a person skilled in the art should also understand that the embodiments described in this specification are all exemplary embodiments, and the involved actions and modules are not necessarily required by the present disclosure.

According to another aspect of the embodiments of the present disclosure, an illumination rendering apparatus for implementing the above illumination rendering method is further provided. As shown in FIG. 9, the apparatus includes: an obtaining unit 902, a determining unit 904, and a rendering unit 906.

(1) The obtaining unit 902 is configured to obtain a first picture at a target viewing angle from a virtual three-dimensional scene. The first picture includes a virtual object to be subject to illumination rendering in the virtual three-dimensional scene at the target viewing angle.
(2) The determining unit 904 is configured to determine a target virtual light source point set used for performing illumination rendering on the virtual object in the first picture.
(3) The rendering unit 906 is configured to perform illumination rendering on the virtual object in the first picture according to the target virtual light source point set.

Optionally, the illumination rendering method is applicable to, but is not limited to, a process of performing illumination rendering on a virtual three-dimensional scene, for example, a process of performing illumination rendering on a virtual three-dimensional scene in a game, a process of performing illumination rendering on a virtual three-dimensional scene in virtual training, or a process of performing rendering on a virtual three-dimensional scene in virtual shopping.

The following description is made by using an example in which illumination rendering is performed on a virtual three-dimensional scene in a game. During the game, the virtual three-dimensional scene is run in the game. The virtual three-dimensional scene includes a virtual object to be subject to global illumination rendering. In the conventional technology, a real-time calculation is generally required to be performed based on an illumination effect on the virtual object in the virtual three-dimensional scene by a virtual light source in the virtual three-dimensional scene, to obtain a calculation result, and global illumination rendering is performed on the virtual object. However, the method requires a large calculation amount, and has a low efficiency in global illumination rendering on the virtual three-dimensional scene. In this embodiment, the first picture at the target viewing angle is obtained from the virtual three-dimensional scene, the target virtual light source point set used for performing illumination rendering on the virtual object in the first picture is determined, and illumination rendering is performed on the virtual object in the first picture by using the target virtual light source point set. In this way, the illumination rendering is performed only on the first picture, instead of performing real-time rendering on the virtual three-dimensional scene, thereby reducing the calculation amount during rendering, and improving the efficiency of rendering the virtual three-dimensional scene.

In accordance with the present invention, the determining unit includes: a first determining module and a first combining module.

> (1) The first determining module is configured to determine an original virtual light source point set of each sub-picture in the first picture. The first picture includes multiple sub-pictures.
> (2) The first combining module is configured to combine original virtual light source point sets of all the sub-pictures to obtain the target virtual light source point set. All light source points in the target virtual light source point set are different from each other.

In this embodiment, the original picture is divided into the multiple sub-pictures, and the original virtual light source point sets of all the sub-pictures are obtained and combined to obtain the target virtual light source point set. In this way, the target virtual light source points of the target virtual light source point set are relatively dispersed, and are not concentrated in a relatively small region of the original picture, thereby improving the accuracy of determining the target virtual light source points.

In an optional implementation, the first determining module includes: a first determining submodule and a second determining submodule.

> (1) The first determining submodule is configured to determine, for each sub-picture in the first picture, an associated pixel of each pixel in the sub-picture, to obtain an associated pixel set of the sub-picture.
> (2) The second determining submodule is configured to determine first M pixels that appear the most frequently in the associated pixel set, to form the original virtual light source point set of the sub-picture, where M is an integer greater than zero.

In this embodiment, in the process that the associated pixel set of the sub-picture is determined, several pixels that appear the most frequently among associated pixels of the pixels in the sub-picture are determined to form the original virtual light source point set, thereby resolving the problem of a large calculation amount caused by a large quantity of light source points that need to be calculated. In addition, because the several pixels that appear the most frequently, which are selected by using the foregoing method, are of high importance, the accuracy of determining the target virtual light source points is ensured.

In an optional implementation, the first determining submodule is further configured to perform the following steps:

> (1) for each pixel in the sub-picture, determining the pixel as a first pixel, and performing the following operations including: determining, in each of four directions including up, down, left, and right, of the first pixel, a pixel that is closest to the first pixel and has a depth smaller than a depth of the first pixel as a second pixel, and determining a second pixel with a minimum depth among second pixels respectively determined in the four directions as an associated pixel of the first pixel; and
> (2) combining associated pixels of all pixels in the sub-picture into the associated pixel set of the sub-picture, where the associated pixel set includes repeated pixels.

In this embodiment, the associated pixel of each pixel is traversed by using the foregoing method, so that an associated pixel that meets a condition can be traversed in a relatively short period of time without traversing all the pixels, thereby improving the efficiency of obtaining the associated pixel of each pixel.

In an optional implementation, the determining unit includes: a second determining module and a second combining module.

(1) The second determining module is configured to determine an original virtual light source point set of each sub-picture in the first picture in a case that a difference between a time at which the first picture is obtained and a time at which a (J-1)$^{th}$ processed picture is obtained is greater than or equal to a first threshold. The first picture includes multiple sub-pictures, the first picture is a J$^{th}$ picture in a picture set, and J is an integer greater than 1.

(2) The second combining module is configured to combine original virtual light source point sets of all the sub-pictures to obtain the target virtual light source point set of the first picture. All light source points in the target virtual light source point set are different from each other.

In this embodiment, by setting the first threshold, the target virtual light source point is calculated once every first threshold, thereby reducing the frequency of calculating the target virtual light source point, and improving the efficiency of determining the target virtual light source point.

In an optional implementation, the determining unit further includes: a third determining module.

(1) The third determining module is configured to determine a target virtual light source point set of the (J-1)$^{th}$ processed picture as the target virtual light source point set of the first picture in a case that the difference between the time at which the first picture is obtained and the time at which the (J-1)$^{th}$ processed picture is obtained is less than the first threshold. The first picture is the J$^{th}$ picture in the picture set, and J is an integer greater than 1.

In this embodiment, by setting the first threshold, a target virtual light source point of a previous picture is directly assigned to the first picture if a time interval between the first picture and the previous picture is less than the first threshold, thereby improving the efficiency of determining the target virtual light source point.

In an optional implementation, the rendering unit includes: a first obtaining module and a superimposing module.

(1) The first obtaining module is configured to obtain an illumination result of each pixel in the first picture by the target virtual light source point set, to obtain an illumination map of the first picture. The illumination map records an illumination value for each pixel in the first picture.

(2) The superimposing module is configured to superimpose the illumination map with a color map of the first picture, to obtain a rendered first picture.

In this embodiment, the illumination map is superimposed with the color map, so that the first picture may be directly processed so as to implement illumination rendering on the virtual object in the virtual three-dimensional scene, thereby improving the efficiency of illumination rendering.

In an optional implementation, the obtaining module includes: an execution submodule.

(1) The execution submodule is configured to: for each pixel in the first picture, determine the pixel as a third pixel, and perform the following operations until illumination results of all pixels in the first picture are determined:

(2) determining a first illumination value of the third pixel by each virtual light source point in the target virtual light source point set; and

(3) accumulating first illumination values of the third pixel by all the virtual light source points in the target virtual light source point set, to obtain an illumination result of the third pixel.

In this embodiment, first illumination values of a pixel by all target virtual light source points in the target virtual light source point set are determined, and the first illumination values are accumulated to obtain the illumination result of the pixel, improving the efficiency of obtaining the illumination map of the first picture.

In an optional implementation, the rendering unit is configured to: obtain a target virtual light source point set of each processed picture before the first picture in a picture set; determine a second virtual light source point set of the first picture according to target virtual light source point sets of all pictures in the picture set, where the first picture is a last picture in the picture set; replace N pixels in the second virtual light source point set of the first picture with N pixels in a first virtual light source point set of a processed picture in a previous frame of the first picture, and determine the second virtual light source point set formed after replacement as a first virtual light source point set of the first picture; and perform illumination rendering on the virtual object in the first picture by using the first virtual light source point set of the first picture.

In this embodiment, the first virtual light source point set of the first picture is determined according to the target virtual light source point sets of all pictures in the picture set, and illumination rendering is performed on the first picture by using the first virtual light source point set, avoiding flickering during rendering.

In an optional implementation, the processing unit further includes: a second obtaining module, a third obtaining module, a fourth obtaining module and a fourth determining module.

(1) The second obtaining module is configured to obtain a weight set for each processed picture in the picture set.

(2) The third obtaining module is configured to obtain, for each pixel in the target virtual light source point set of the first picture, a weight of a processed picture whose target virtual light source point set includes the pixel.

(3) The fourth obtaining module is configured to obtain a sum of weights of processed pictures whose target virtual light source point set includes the pixel, to obtain a weight sum of each pixel in the first picture.

(4) The fourth determining module is configured to determine K pixels with the largest weight sum in the first picture to form the second virtual light source point set of the first picture, where K is an integer greater than zero.

In this embodiment, the first virtual light source point set is determined by using the above method, ensuring the accuracy of determining the first virtual light source point set.

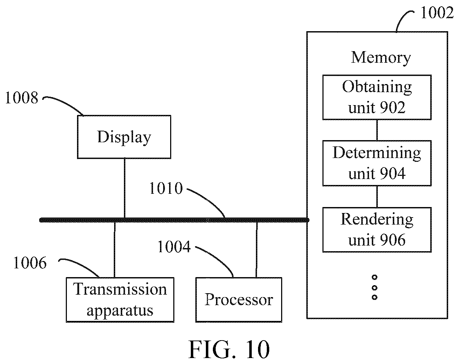

According to yet another aspect of the embodiments of the present disclosure, an electronic device for implementing the illumination rendering method is further provided. As shown in FIG. 10, the electronic device includes a memory 1002 and a processor 1004. The memory 1002 stores a computer program. The processor 1004 is configured to execute the computer program to perform the steps in any one of the method embodiments described above.

Optionally, in this embodiment, the electronic device may be located in at least one of multiple network devices in a computer network.

Optionally, in this embodiment, the processor is configured to perform the following steps by executing the computer program:

S1. obtaining a first picture at a target viewing angle from a virtual three-dimensional scene, the first picture including a virtual object to be subject to illumination rendering in the virtual three-dimensional scene at the target viewing angle;

S2. determining a target virtual light source point set used for performing illumination rendering on the virtual object in the first picture; and

S3. performing illumination rendering on the virtual object in the first picture according to the target virtual light source point set.

Optionally, a person of ordinary skill in the art may understand that, the structure shown in FIG. 10 is only illustrative. The electronic device may be a terminal device such as a smartphone (such as an Android mobile phone or an iOS mobile phone), a tablet computer, a palmtop computer, a mobile Internet device (MID), or a PAD. FIG. 10 does not limit the structure of the electronic device. For example, the electronic device may further include more or fewer components (such as a network interface) than those shown in FIG. 10, or have a configuration different from that shown in FIG. 10.

The memory 1002 may be configured to store a software program and a module, for example, a program instruction/module corresponding to the illumination rendering method and apparatus in the embodiments of the present disclosure. The processor 1004 performs various functional applications and data processing by running the software program and the module stored in the memory 1002, that is, implementing the illumination rendering method. The memory 1002 may include a high-speed random access memory, and may further include a non-volatile memory, for example, one or more magnetic storage apparatuses, a flash memory, or another non-volatile solid-state memory. In some embodiments, the memory 1002 may further include memories remotely disposed relative to the processor 1004, and the remote memories may be connected to a terminal through a network. Examples of the network include, but are not limited to, the Internet, an intranet, a local area network, a mobile communications network and a combination thereof. The memory 1002 may be specifically configured to, but is not limited to, store information such as the first picture and the target virtual light source point set. In an example, as shown in FIG. 10, the memory 1002 may include, but is not limited to, the obtaining unit 902, the determining unit 904, and the rendering unit 906 in the illumination rendering apparatus. In addition, the memory may further include, but is not limited to, other modules and units in the illumination rendering apparatus, which is not described in detail herein.

Optionally, a transmission apparatus 1006 is provided to receive or transmit data via a network. Specific examples of the foregoing network may include a wired network and a wireless network. In an example, the transmission apparatus 1006 includes a network interface controller (NIC). The NIC may be connected to another network device and a router via a network cable, to communicate with the Internet or a local area network. In an example, the transmission apparatus 1006 is a radio frequency (RF) module, which communicates with the Internet in a wireless manner.

In addition, the electronic device further includes: a display 1008 and a connection bus 1010. The display 1008 is configured to display a first picture obtained after illumination rendering. The connection bus 1010 is configured to connect various module components in the electronic device.

According to still another aspect of the embodiments of the present disclosure, a storage medium is further provided. The storage medium stores a computer program. The computer program, when executed, causes steps in any one of the foregoing method embodiments to be performed.

Optionally, in this embodiment, the storage medium may be configured to store a computer program for performing the following steps:

S1. obtaining a first picture at a target viewing angle from a virtual three-dimensional scene, the first picture including a virtual object to be subject to illumination rendering in the virtual three-dimensional scene at the target viewing angle.

S2. determining a target virtual light source point set used for performing illumination rendering on the virtual object in the first picture; and

S3. performing illumination rendering on the virtual object in the first picture according to the target virtual light source point set.

Optionally, in this embodiment, a person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a read-only memory (ROM), a random access memory (RAM), a magnetic disk, an optical disk, and the like. The sequence numbers of the foregoing embodiments of the present disclosure are merely for description purposes, and are not intended to indicate priorities of the embodiments.

If the integrated unit in the foregoing embodiments is implemented in a form of a software functional unit and sold or used as an independent product, the integrated unit may be stored in the foregoing computer-readable storage medium. Based on such an understanding, the technical solutions of the present disclosure essentially, or the part contributing to the conventional technology, or all or some of the technical solutions may be implemented in a form of a software product. The computer software product is stored in a storage medium and includes several instructions for causing one or more computer devices (which may be a personal computer, a server, a network device, and the like) to perform all or some of the steps of the methods described in the embodiments of the present disclosure.

In the foregoing embodiments of the present disclosure, descriptions of the embodiments have respective focuses. As for parts that are not described in detail in one embodiment, reference may be made to the relevant descriptions of the other embodiments.

In the several embodiments provided in the present disclosure, it is to be understood that, the disclosed client may be implemented in another manner. The apparatus embodiments described above are merely exemplary. For example, the divisions of the units is merely the division of logical functions, and other division manners may be used during actual implementation. For example, multiple units or components may be combined, or may be integrated into another system, or some features may be ignored or not performed. In addition, the mutual coupling, or direct coupling, or communication connection that is presented or discussed may be the indirect coupling or communication connection implemented through some interfaces, units, or modules, and may be in electrical or other forms.

The units described as separate components may be or may not be physically separated, and the components displayed as units may be or may not be physical units, and may be located in one place, or may be distributed on multiple network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

The foregoing merely shows exemplary implementations of the present invention. It should be noted that, a person of ordinary skill in the art may further make several improvements and modifications that shall fall within the protection scope of the present invention, which is set out by the appended claims.

**Claims**

1. An illumination rendering method, executable by a terminal device, the method comprising:

obtaining (S102, S202) a first picture at a target viewing angle from a virtual three-dimensional scene, the first picture comprising a virtual object to be subject to illumination rendering in the virtual three-dimensional scene at the target viewing angle;

determining (S104, S204) a target virtual light source point set used for performing illumination rendering on the virtual object in the first picture; and

performing (S106, S206) illumination rendering on the virtual object in the first picture according to the target virtual light source point set,

wherein the determining a target virtual light source point set used for performing illumination rendering on the virtual object in the first picture comprises:

> determining an original virtual light source point set of each sub-picture in the first picture, the first picture comprising a plurality of sub-pictures; and
>
> combining original virtual light source point sets of all the sub-pictures to obtain the target virtual light source point set, wherein all light source points in the target virtual light source point set are different from each other,

**characterized in that** the determining an original virtual light source point set of each sub-picture in the first picture comprises:

> determining, for each sub-picture in the first picture, an associated pixel of each pixel in the sub-picture, to obtain an associated pixel set of the sub-picture; and
>
> determining the first M pixels that appear the most frequently in the associated pixel set to form the original virtual light source point set of the sub-picture, M being an integer greater than zero,

wherein the determining the associated pixel of each pixel in the sub-picture, to obtain the associated pixel set of the sub-picture comprises:

> for each pixel in the sub-picture, determining the pixel as a first pixel, and performing the following operations including: determining, in each of four directions including up, down, left and right, of the first pixel, a pixel that is closest to the first pixel and has a depth smaller than a depth of the first pixel as a second pixel, the depth of a pixel representing a depth distance between a position in the 3D scene, to which a point with coordinates $(x, y)$ on a 2D image corresponds, and an observation position, and
>
> determining a second pixel with a minimum depth among second pixels respectively determined in the four directions as an associated pixel of the first pixel; and
>
> combining associated pixels of all pixels in the sub-picture into the associated pixel set of the sub-picture, wherein the associated pixel set includes repeated associated pixels.

2. The method according to claim 1, wherein the determining a target virtual light source point set used for performing illumination rendering on the virtual object in the first picture comprises:

> determining an original virtual light source point set of each sub-picture in the first picture in a case that a difference between a time at which the first picture is obtained and a time at which a $(J-1)^{th}$ processed picture is obtained is greater than or equal to a first threshold, the first picture comprising a plurality of sub-pictures, the first picture being a $J^{th}$ picture in a picture set, and J being an integer greater than 1, wherein the first threshold is used for controlling whether to calculate a target virtual light source point set of the first picture; and
>
> combining original virtual light source point sets of all the sub-pictures to obtain the target virtual light source point set, all light source points in the target virtual light source point set being different from each other.

3. The method according to claim 1 or 2, wherein the determining a target virtual light source point set used for performing illumination rendering on the virtual object in the first picture further comprises:
determining a target virtual light source point set of a $(J-1)^{th}$ processed picture as the target virtual light source point set of the first picture in a case that a difference between a time at which the first picture is obtained and a time at which the $(J-1)^{th}$ processed picture is obtained is less than a first threshold, the first picture being a $J^{th}$ picture in a picture set, and J being an integer greater than 1, the (J-1)th processed picture being a picture in the picture set that is before the first picture and has been processed by illumination rendering.

4. The method according to claim 1, wherein the performing illumination rendering on the virtual object in the first picture according to the target virtual light source point set comprises:

> obtaining an illumination result of each pixel in the first picture by the target virtual light source point set, to obtain an illumination map of the first picture, the illumination map recording an illumination value for each pixel in the first picture; and

superimposing the illumination map with a color map of the first picture, to obtain a rendered first picture.

5. The method according to claim 4, wherein the obtaining an illumination result of each pixel in the first picture by the target virtual light source point set comprises:

for each pixel in the first picture, determining the pixel as a third pixel, and performing the following operations until illumination results of all pixels in the first picture are determined:

determining a first illumination value of the third pixel by each virtual light source point in the target virtual light source point set; and

accumulating first illumination values of the third pixel by all the virtual light source points in the target virtual light source point set, to obtain an illumination result of the third pixel.

6. The method according to claim 1, wherein the performing illumination rendering on the virtual object in the first picture according to the target virtual light source point set comprises:

obtaining a target virtual light source point set of each processed picture before the first picture in a picture set;

determining a second virtual light source point set of the first picture according to target virtual light source point sets of all pictures in the picture set, the first picture being a last picture in the picture set;

replacing N pixels in the second virtual light source point set of the first picture with N pixels in a first virtual light source point set of a processed picture before the first picture, and determining the second virtual light source point set formed after replacement as a first virtual light source point set of the first picture; and

performing illumination rendering on the virtual object in the first picture by using the first virtual light source point set of the first picture.

7. The method according to claim 6, wherein the determining a second virtual light source point set of the first picture according to target virtual light source point sets of all pictures in the picture set comprises:

obtaining a weight set for each processed picture in the picture set;

obtaining, for each pixel in the target virtual light source point set of the first picture, a weight of a processed picture whose target virtual light source point set comprises the pixel;

obtaining a sum of weights of processed pictures whose target virtual light source point set comprises the pixel, to obtain a weight sum of each pixel in the target virtual light source point set of the first picture; and

determining K pixels with the largest weight sum in the first picture to form the second virtual light source point set of the first picture, K being an integer greater than zero.

8. The method according to claim 5, wherein the determining a first illumination value of the third pixel by each virtual light source point in the target virtual light source point set comprises:

moving the virtual light source point in the target virtual light source point set by a distance along an extension line connecting the third pixel and the virtual light source point, and decreasing an attenuation coefficient of an illumination radiance of the virtual light source point.

9. An illumination rendering apparatus, comprising:

an obtaining unit (902), configured to obtain a first picture at a target viewing angle from a virtual three-dimensional scene, the first picture comprising a virtual object to be subject to illumination rendering in the virtual three-dimensional scene at the target viewing angle;

a determining unit (904), configured to determine a target virtual light source point set used for performing illumination rendering on the virtual object in the first picture; and

a rendering unit (906), configured to perform illumination rendering on the virtual object in the first picture according to the target virtual light source point set,

wherein the determining unit comprises:

a first determining module, configured to determine an original virtual light source point set of each sub-picture in the first picture, the first picture comprising a plurality of sub-pictures; and

a first combining module, configured to combine original virtual light source point sets of all the sub-pictures to obtain the target virtual light source point set, all light source points in the target virtual light source point set being different from each other,

**characterized in that** the first determining module comprises:

a first determining submodule configured to determine, for each sub-picture in the first picture, an associated pixel of each pixel in the sub-picture, to obtain an associated pixel set of the sub-picture; and
a second determining submodule configured to determine the first M pixels that appear the most frequently in the associated pixel set, to form the original virtual light source point set of the sub-picture, where M is an integer greater than zero,

wherein the first determining submodule is further configured to:

for each pixel in the sub-picture, determine the pixel as a first pixel, and perform the following operations including: determining, in each of four directions including up, down, left and right, of the first pixel, a pixel that is closest to the first pixel and has a depth smaller than a depth of the first pixel as a second pixel, the depth of a pixel representing a depth distance between a position in the 3D scene, to which a point with coordinates (x, y) on a 2D image corresponds, and an observation position, and determining a second pixel with a minimum depth among second pixels respectively determined in the four directions as an associated pixel of the first pixel; and
combine associated pixels of all pixels in the sub-picture into the associated pixel set of the sub-picture, wherein the associated pixel set includes repeated associated pixels.

10. A storage medium, storing a computer program that, when run, executed by a computer, causes the computer to perform the method according to any one of claims 1 to 8.

11. An electronic device, comprising:

a memory storing a computer program; and
a processor, configured to execute the computer program to perform the method according to any one of claims 1 to 8.

12. A computer program product that, when executed by a computer, causes the computer to perform the method according to any one of claims 1 to 8.

**Patentansprüche**

1. Beleuchtungsrenderingverfahren, das von einer Endgerätevorrichtung ausführbar ist, wobei das Verfahren Folgendes umfasst:

Erhalten (S102, S202) eines ersten Bildes in einem Zielbetrachtungswinkel von einer virtuellen dreidimensionalen Szene, wobei das erste Bild ein virtuelles Objekt umfasst, das einem Beleuchtungsrendering in der virtuellen dreidimensionalen Szene im Zielbetrachtungswinkel zu unterziehen ist;
Bestimmen (S104, S204) eines virtuellen Ziellichtquellenpunktsatzes, der zum Durchführen eines Beleuchtungsrendering am virtuellen Objekt im ersten Bild verwendet wird; und
Durchführen (S106, S206) eines Beleuchtungsrendering am virtuellen Objekt im ersten Bild gemäß dem virtuellen Ziellichtquellenpunktsatz,
wobei das Bestimmen eines virtuellen Ziellichtquellenpunktsatzes, der zum Durchführen eines Beleuchtungsrendering am virtuellen Objekt im ersten Bild verwendet wird, Folgendes umfasst:

Bestimmen eines ursprünglichen virtuellen Lichtquellenpunktatzes von jedem Unterbild im ersten Bild, wobei das erste Bild eine Vielzahl von Unterbildern umfasst; und
Kombinieren der ursprünglichen virtuellen Lichtquellenpunktsätze von allen Unterbildern, um den virtuellen Ziellichtquellenpunktsatz zu erhalten, wobei sich alle Lichtquellenpunkte im virtuellen Ziellichtquellenpunktsatz voneinander unterscheiden,
**dadurch gekennzeichnet, dass** das Bestimmen eines ursprünglichen virtuellen Lichtquellenpunktatzes von jedem Unterbild im ersten Bild Folgendes umfasst:

Bestimmen eines verknüpften Pixels von jedem Pixel im Unterbild für jedes Unterbild im ersten Bild, um einen verknüpften Pixelsatz des Unterbildes zu erhalten; und

Bestimmen der ersten M Pixel, die am verknüpften Pixelsatz am häufigsten erscheinen, um den ursprünglichen virtuellen Lichtquellenpunktatz des Unterbildes zu bilden, wobei M eine Ganzzahl größer als null ist,

wobei das Bestimmen des verknüpften Pixels von jedem Pixel im Unterbild, um den verknüpften Pixelsatz des Unterbildes zu erhalten, Folgendes umfasst:

Bestimmen des Pixels als ein erstes Pixel und Durchführen der folgenden Operationen, die Folgendes beinhalten, für jedes Pixel im Unterbild: in jeder von vier Richtungen, die oben, unten, links und rechts des ersten Pixels beinhalten, Bestimmen eines Pixels, das dem ersten Pixel am nächsten ist und eine Tiefe aufweist, die kleiner ist als eine Tiefe des ersten Pixels, als ein zweites Pixel, wobei die Tiefe eines Pixels einen Tiefenabstand zwischen einer Position in der 3D-Szene repräsentiert, dem ein Punkt mit Koordinaten (x, y) auf einem 2D-Bild entspricht, und einer Betrachtungsposition, und

Bestimmen eines zweiten Pixels mit einer minimalen Tiefe unter zweiten Pixeln, die in den vier Richtungen jeweils als ein verknüpftes Pixel des ersten Pixels bestimmt wurden; und

Kombinieren von verknüpften Pixeln von allen Pixeln im Unterbild mit dem verknüpften Pixelsatz des Unterbildes, wobei der verknüpfte Pixelsatz wiederholte verknüpfte Pixel beinhaltet.

2. Verfahren nach Anspruch 1, wobei das Bestimmen eines virtuellen Ziellichtquellenpunktsatzes, der zum Durchführen eines Beleuchtungsrendering am virtuellen Objekt im ersten Bild verwendet wird, Folgendes umfasst:

in einem Fall, in dem eine Differenz zwischen einer Zeit, zu der das erste Bild erhalten wird, und einer Zeit zu der ein (J-1)-tes verarbeitetes Bild erhalten wird, größer als oder gleich einem ersten Schwellwert ist, Bestimmen eines ursprünglichen virtuellen Lichtquellenpunktatzes von jedem Unterbild im ersten Bild, wobei das erste Bild eine Vielzahl von Unterbildern umfasst, wobei das erste Bild ein J-tes Bild in einem Bildsatz ist, und wobei J eine Ganzzahl größer als 1 ist, wobei der erste Schwellwert zum Steuern verwendet wird, ob ein virtueller Ziellichtquellenpunktsatz des ersten Bildes zu berechnen ist; und

Kombinieren der ursprünglichen virtuellen Lichtquellenpunktsätze von allen Unterbildern, um den virtuellen Ziellichtquellenpunktsatz zu erhalten, wobei sich alle Lichtquellenpunkte im virtuellen Ziellichtquellenpunktsatz voneinander unterscheiden.

3. Verfahren nach Anspruch 1 oder 2, wobei das Bestimmen eines virtuellen Ziellichtquellenpunktsatzes, der zum Durchführen eines Beleuchtungsrendering am virtuellen Objekt im ersten Bild verwendet wird, ferner Folgendes umfasst:

in einem Fall, in dem eine Differenz zwischen einer Zeit, zu der das erste Bild erhalten wird, und einer Zeit, zu der das (J-1)-te verarbeitete Bild erhalten wird, kleiner als ein erster Schwellwert ist, Bestimmen eines virtuellen Ziellichtquellenpunktsatzes eines (J-1)-ten verarbeiteten Bildes als den virtuellen Ziellichtquellenpunktsatz des ersten Bildes, wobei das erste Bild ein J-tes Bild in einem Bildsatz ist, und wobei J eine Ganzzahl größer als 1 ist, wobei das (J-1)-te verarbeitete Bild ein Bild im Bildsatz ist, das vor dem ersten Bild liegt und mittels Beleuchtungsrendering verarbeitet wurde.

4. Verfahren nach Anspruch 1, wobei das Durchführen eines Beleuchtungsrendering am virtuellen Objekt im ersten Bild gemäß dem virtuellen Ziellichtquellenpunktsatz Folgendes umfasst:

Erhalten eines Beleuchtungsergebnisses von jedem Pixel im ersten Bild durch den virtuellen Ziellichtquellenpunktsatz, um eine Beleuchtungskarte des ersten Bildes zu erhalten, wobei die Beleuchtungskarte einen Beleuchtungswert für jedes Pixel im ersten Bild aufzeichnet; und

Überlagern der Beleuchtungskarte mit einer Farbkarte des ersten Bildes, um ein gerendertes erstes Bild zu erhalten.

5. Verfahren nach Anspruch 4, wobei das Erhalten eines Beleuchtungsergebnisses von jedem Pixel im ersten Bild durch den virtuellen Ziellichtquellenpunktsatz Folgendes umfasst:

für jedes Pixel im ersten Bild Bestimmen des Pixels als ein drittes Pixel und Durchführen der folgenden Operation, bis Beleuchtungsergebnisse von allen Pixeln im ersten Bild bestimmt sind:

Bestimmen eines ersten Beleuchtungswertes des dritten Pixels durch jeden virtuellen Lichtquellenpunkt im virtuellen Ziellichtquellenpunktsatz; und
Akkumulieren von ersten Beleuchtungswerten des dritten Pixels durch alle virtuellen Lichtquellenpunkte im virtuellen Ziellichtquellenpunktsatz, um ein Beleuchtungsergebnis des dritten Pixels zu erhalten.

6. Verfahren nach Anspruch 1, wobei das Durchführen eines Beleuchtungsrendering am virtuellen Objekt im ersten Bild gemäß dem virtuellen Ziellichtquellenpunktsatz Folgendes umfasst:

Erhalten eines virtuellen Ziellichtquellenpunktsatzes von jedem verarbeiteten Bild vor dem ersten Bild in einem Bildsatz;
Bestimmen eines zweiten virtuellen Lichtquellenpunktsatzes des ersten Bildes gemäß virtuellen Ziellichtquellenpunktsätzen von allen Bildern im Bildsatz, wobei das erste Bild ein letztes Bild im Bildsatz ist;
Ersetzen von N Pixeln im zweiten virtuellen Lichtquellenpunktsatz des ersten Bildes durch N Pixel in einem ersten virtuellen Lichtquellenpunktsatz eines verarbeiteten Bildes vor dem ersten Bild und Bestimmen des zweiten virtuellen Lichtquellenpunktsatzes, der nach dem Ersetzen eines ersten virtuellen Lichtquellenpunktsatzes des ersten Bildes gebildet wurde; und
Durchführen eines Beleuchtungsrendering am virtuellen Objekt im ersten Bild unter Verwendung des ersten virtuellen Lichtquellenpunktsatzes des ersten Bildes.

7. Verfahren nach Anspruch 6, wobei das Bestimmen eines zweiten virtuellen Lichtquellenpunktsatzes des ersten Bildes gemäß virtuellen Ziellichtquellenpunktsätzen von allen Bildern im Bildsatz Folgendes umfasst:

Erhalten eines Gewichtungssatzes für jedes verarbeitete Bild im Bildsatz;
Erhalten einer Gewichtung eines verarbeiteten Bildes, dessen virtueller Ziellichtquellenpunktsatz das Pixel umfasst, für jedes Pixel im virtuellen Ziellichtquellenpunktsatz des ersten Bildes;
Erhalten einer Summe von Gewichtungen von verarbeiteten Bildern, deren virtueller Ziellichtquellenpunktsatz das Pixel umfasst, um eine Gewichtungssumme von jedem Pixel im virtuellen Ziellichtquellenpunktsatz des ersten Bildes zu erhalten; und
Bestimmen von K Pixeln mit der größten Gewichtungssumme im ersten Bild aus dem zweiten virtuellen Lichtquellenpunktsatz des ersten Bildes, wobei K eine Ganzzahl größer als null ist.

8. Verfahren nach Anspruch 5, wobei das Bestimmen eines ersten Beleuchtungswertes des dritten Pixels durch jeden virtuellen Lichtquellenpunkt im virtuellen Ziellichtquellenpunktsatz Folgendes umfasst:
Bewegen des virtuellen Lichtquellenpunkts im virtuellen Ziellichtquellenpunktsatz um einen Abstand entlang einer Verlängerungslinie, die das dritte Pixel und den virtuellen Lichtquellenpunkt verbindet, und Verringern eines Dämpfungskoeffizienten einer Beleuchtungsstrahlung des virtuellen Lichtquellenpunkts.

9. Beleuchtungsrenderingeinrichtung, die Folgendes umfasst:

eine Erhaltungseinheit (902), die dazu ausgelegt ist, ein erstes Bild in einem Zielbetrachtungswinkel von einer virtuellen dreidimensionalen Szene zu erhalten, wobei das erste Bild ein virtuelles Objekt umfasst, das einem Beleuchtungsrendering in der virtuellen dreidimensionalen Szene im Zielbetrachtungswinkel zu unterziehen ist;
eine Bestimmungseinheit (904), die dazu ausgelegt ist, einen virtuellen Ziellichtquellenpunktsatz zu bestimmen, der zum Durchführen eines Beleuchtungsrendering am virtuellen Objekt im ersten Bild verwendet wird; und
eine Rendereinheit (906), die dazu ausgelegt ist, am virtuellen Objekt im ersten Bild gemäß dem virtuellen Ziellichtquellenpunktsatz ein Beleuchtungsrendering durchzuführen,
wobei die Bestimmungseinheit Folgendes umfasst:

ein erstes Bestimmungsmodul, das dazu ausgelegt ist, einen ursprünglichen virtuellen Lichtquellenpunktatz von jedem Unterbild im ersten Bild zu bestimmen, wobei das erste Bild eine Vielzahl von Unterbildern umfasst; und
ein erstes Kombinationsmodul, das dazu ausgelegt ist, die ursprünglichen virtuellen Lichtquellenpunktsätze von allen Unterbildern zu kombinieren, um den virtuellen Ziellichtquellenpunktsatz zu erhalten, wobei sich alle Lichtquellenpunkte im virtuellen Ziellichtquellenpunktsatz voneinander unterscheiden, **dadurch gekennzeichnet, dass** das erste Bestimmungsmodul Folgendes umfasst:

ein erstes Bestimmungsuntermodul, das dazu ausgelegt ist, ein verknüpftes Pixel von jedem Pixel im Unterbild für jedes Unterbild im ersten Bild zu bestimmen, um einen verknüpften Pixelsatz des Unterbildes zu erhalten; und

ein zweites Bestimmungsuntermodul, das dazu ausgelegt ist, die ersten M Pixel zu bestimmen, die am verknüpften Pixelsatz am häufigsten erscheinen, um den ursprünglichen virtuellen Lichtquellenpunktatz des Unterbildes zu bilden, wobei M eine Ganzzahl größer als null ist,
wobei das erste Bestimmungsuntermodul ferner zu Folgendem ausgelegt ist:

Bestimmen des Pixels als ein erstes Pixel und Durchführen der folgenden Operationen, die Folgendes beinhalten, für jedes Pixel im Unterbild: in jeder von vier Richtungen, die oben, unten, links und rechts des ersten Pixels beinhalten, Bestimmen eines Pixels, das dem ersten Pixel am nächsten ist und eine Tiefe aufweist, die kleiner ist als eine Tiefe des ersten Pixels, als ein zweites Pixel, wobei die Tiefe eines Pixels einen Tiefenabstand zwischen einer Position in der 3D-Szene repräsentiert, dem ein Punkt mit Koordinaten (x, y) auf einem 2D-Bild entspricht, und einer Betrachtungsposition, und Bestimmen eines zweiten Pixels mit einer minimalen Tiefe unter den zweiten Pixeln, die in den vier Richtungen jeweils als ein verknüpftes Pixel des ersten Pixels bestimmt wurden; und
Kombinieren von verknüpften Pixeln von allen Pixeln im Unterbild mit dem verknüpften Pixelsatz des Unterbildes, wobei der verknüpfte Pixelsatz wiederholte verknüpfte Pixel beinhaltet.

10. Speichermedium, auf dem ein Computerprogramm gespeichert ist, das, wenn es von einem Computer ausgeführt läuft, den Computer veranlasst, das Verfahren nach einem der Ansprüche 1 bis 8 durchzuführen.

11. Elektronische Vorrichtung, die Folgendes umfasst:

einen Speicher, in dem ein Computerprogramm gespeichert ist; und
einen Prozessor, der dazu ausgelegt ist, das Computerprogramm auszuführen, um das Verfahren nach einem der Ansprüche 1 bis 8 durchzuführen.

12. Computerprogrammprodukt, das, wenn es von einem Computer ausgeführt wird, den Computer veranlasst, das Verfahren nach einem der Ansprüche 1 bis 8 durchzuführen.

## Revendications

1. Procédé de rendu d'éclairage, exécutable par un dispositif terminal, le procédé comprenant les étapes suivantes :

obtenir (S102, S202) une première image à un angle de vue cible à partir d'une scène tridimensionnelle virtuelle, la première image comprenant un objet virtuel devant faire l'objet d'un rendu d'éclairage dans la scène tridimensionnelle virtuelle à l'angle de vue cible ;
déterminer (S104, S204) un ensemble de points sources de lumière virtuels cibles utilisés pour réaliser un rendu d'éclairage sur l'objet virtuel dans la première image ; et
réaliser (S106, S206) un rendu d'éclairage sur l'objet virtuel dans la première image selon l'ensemble de points sources de lumière virtuels cibles,
dans lequel la détermination d'un ensemble de points sources de lumière virtuels cibles utilisés pour réaliser un rendu d'éclairage sur l'objet virtuel dans la première image comprend ce qui suit :

déterminer un ensemble de points sources de lumière virtuels d'origine de chaque sous-image de la première image, la première image comprenant une pluralité de sous-images ; et
combiner les ensembles de points sources de lumière virtuels d'origine de toutes les sous-images pour obtenir l'ensemble de points sources de lumière virtuels cibles, dans lequel tous les points sources de lumière de l'ensemble de points sources de lumière virtuels cibles sont différents les uns des autres,
**caractérisé en ce que** la détermination d'un ensemble de points sources de lumière virtuels d'origine de chaque sous-image de la première image comprend ce qui suit :

déterminer pour chaque sous-image de la première image un pixel associé de chaque pixel dans la sous-image pour obtenir un ensemble de pixels associés de la sous-image ; et
déterminer les M premiers pixels de l'ensemble de pixels associés qui apparaissent le plus fréquemment afin de former l'ensemble de points sources de lumière virtuels d'origine de la sous-image, M étant un nombre entier supérieur à zéro,
dans lequel la détermination du pixel associé de chaque pixel dans la sous-image pour obtenir l'ensemble de pixels associés de la sous-image comprend ce qui suit :

pour chaque pixel dans la sous-image, déterminer le pixel comme premier pixel, et réaliser les opérations suivantes : dans chacune de quatre directions du premier pixel comportant le haut, le bas, la gauche et la droite, déterminer comme deuxième pixel un pixel qui est le plus proche du premier pixel et qui a une profondeur inférieure à une profondeur du premier pixel, la profondeur d'un pixel représentant une distance de profondeur entre une position dans la scène 3D à laquelle correspond un point ayant des coordonnées (x, y) sur une image 2D et une position d'observation, et déterminer comme pixel associé du premier pixel un deuxième pixel ayant une profondeur minimale parmi les deuxièmes pixels respectivement déterminés dans les quatre directions ; et

combiner les pixels associés de tous les pixels dans la sous-image de l'ensemble de pixels associés de la sous-image, dans lequel l'ensemble de pixels associés comporte des pixels associés répétés.

2. Procédé selon la revendication 1, dans lequel la détermination d'un ensemble de points sources de lumière virtuels cibles utilisés pour réaliser un rendu d'éclairage sur l'objet virtuel dans la première image comprend ce qui suit :

déterminer un ensemble de points sources de lumière virtuels d'origine de chaque sous-image de la première image dans le cas où une différence entre un moment où la première image est obtenue et un moment où une (J-1)$^{\text{ème}}$ image traitée est obtenue est supérieure ou égale à un premier seuil, la première image comprenant une pluralité de sous-images, la première image étant une J$^{\text{ème}}$ image d'un ensemble d'images, et J étant un nombre entier supérieur à 1, dans lequel le premier seuil est utilisé pour déterminer s'il faut calculer un ensemble de points sources de lumière virtuels cibles de la première image ; et

combiner les ensembles de points sources de lumière virtuels d'origine de toutes les sous-images pour obtenir l'ensemble de points sources de lumière virtuels cibles, tous les points sources de lumière de l'ensemble de points sources de lumière virtuels cibles étant différents les uns des autres.

3. Procédé selon la revendication 1 ou 2, dans lequel la détermination d'un ensemble de points sources de lumière virtuels cibles utilisés pour réaliser un rendu d'éclairage sur l'objet virtuel dans la première image comprend en outre ce qui suit :

déterminer un ensemble de points sources de lumière virtuels cibles d'une (J-1)$^{\text{ème}}$ image traitée comme ensemble de points sources de lumière virtuels cibles de la première image dans le cas où une différence entre un moment où la première image est obtenue et un moment où la (J-1)$^{\text{ème}}$ image traitée est obtenue est inférieure à un premier seuil, la première image étant une J$^{\text{ème}}$ image d'un ensemble d'images, et J étant un nombre entier supérieur à 1, la (J-1)$^{\text{ème}}$ image traitée étant une image de l'ensemble d'images qui précède la première image et qui a été traitée par un rendu d'éclairage.

4. Procédé selon la revendication 1, dans lequel la réalisation d'un rendu d'éclairage sur l'objet virtuel dans la première image selon l'ensemble de points sources de lumière virtuels cibles comprend ce qui suit :

obtenir un résultat d'éclairage de chaque pixel dans la première image par l'ensemble de points sources de lumière virtuels cibles afin d'obtenir une carte d'éclairage de la première image la carte d'éclairage enregistrant une valeur d'éclairage pour chaque pixel dans la première image ; et

superposer la carte d'éclairage à une carte de couleurs de la première image pour obtenir une première image rendue.

5. Procédé selon la revendication 4, dans lequel l'obtention d'un résultat d'éclairage de chaque pixel dans la première image par l'ensemble de points sources de lumière virtuels cibles comprend ce qui suit :

pour chaque pixel dans la première image, déterminer le pixel comme troisième pixel, et réaliser les opérations suivantes jusqu'à ce que des résultats d'éclairage de tous les pixels dans la première image soient déterminés :

déterminer une première valeur d'éclairage du troisième pixel par chaque point source de lumière virtuel de l'ensemble de points sources de lumière virtuels cibles ; et

cumuler des premières valeurs d'éclairage du troisième pixel par tous les points sources de lumière virtuels de l'ensemble de points sources de lumière virtuels cibles pour obtenir un résultat d'éclairage du troisième pixel.

6. Procédé selon la revendication 1, dans lequel la réalisation d'un rendu d'éclairage sur l'objet virtuel dans la première image selon l'ensemble de points sources de lumière virtuels cibles comprend ce qui suit :

obtenir un ensemble de points sources de lumière virtuels cibles de chaque image traitée avant la première image d'un ensemble d'images ;

déterminer un deuxième ensemble de points sources de lumière virtuels de la première image selon les ensembles de points sources de lumière virtuels cibles de toutes les images de l'ensemble d'images, la première image étant une dernière image de l'ensemble d'images ;

remplacer N pixels dans le deuxième ensemble de points sources de lumière virtuels de la première image par N pixels dans un premier ensemble de points sources de lumière virtuels d'une image traitée avant la première image, et déterminer le deuxième ensemble de points sources de lumière virtuels formé après le remplacement comme premier ensemble de points sources de lumière virtuels de la première image ; et

réaliser un rendu d'éclairage sur l'objet virtuel dans la première image en utilisant le premier ensemble de points sources de lumière virtuels de la première image.

7. Procédé selon la revendication 6, dans lequel la détermination d'un deuxième ensemble de points sources de lumière virtuels de la première image selon ensembles de points sources de lumière virtuels cibles de toutes les images de l'ensemble d'images comprend ce qui suit :

obtenir un ensemble de poids pour chaque image traitée de l'ensemble d'images ;

obtenir pour chaque pixel dans l'ensemble de points sources de lumière virtuels cibles de la première image un poids d'une image traitée dont l'ensemble de points sources de lumière virtuels cibles comprend le pixel ;

obtenir une somme des poids des images traitées dont l'ensemble de points sources de lumière virtuels cibles comprend le pixel pour obtenir une somme de poids de chaque pixel dans l'ensemble de points sources de lumière virtuels cibles de la première image ; et

déterminer K pixels ayant la somme de poids la plus grande dans la première image pour former le deuxième ensemble de points sources de lumière virtuels de la première image, K étant un nombre entier supérieur à zéro.

8. Procédé selon la revendication 5, dans lequel la détermination d'une première valeur d'éclairage du troisième pixel par chaque point source de lumière virtuel de l'ensemble de points sources de lumière virtuels cibles comprend ce qui suit :

déplacer le point source de lumière virtuel de l'ensemble de points sources de lumière virtuels cibles d'une distance le long d'une ligne d'extension connectant le troisième pixel et le point source de lumière virtuel, et diminuer un coefficient d'atténuation d'une radiance d'éclairage du point source de lumière virtuel.

9. Appareil de rendu d'éclairage, comprenant :

une unité d'obtention (902) configurée pour obtenir une première image à un angle de vue cible à partir d'une scène tridimensionnelle virtuelle, la première image comprenant un objet virtuel devant faire l'objet d'un rendu d'éclairage dans la scène tridimensionnelle virtuelle à l'angle de vue cible ;

une unité de détermination (904) configurée pour déterminer un ensemble de points sources de lumière virtuels cibles utilisés pour réaliser un rendu d'éclairage sur l'objet virtuel dans la première image ; et

une unité de rendu (906) configurée pour réaliser un rendu d'éclairage sur l'objet virtuel dans la première image selon l'ensemble de points sources de lumière virtuels cibles,

dans lequel l'unité de détermination comprend :

un premier module de détermination configuré pour déterminer un ensemble de points sources de lumière virtuels d'origine de chaque sous-image de la première image, la première image comprenant une pluralité de sous-images ; et

un premier module de combinaison configuré pour combiner les ensembles de points sources de lumière virtuels d'origine de toutes les sous-images pour obtenir l'ensemble de points sources de lumière virtuels cibles, tous les points sources de lumière de l'ensemble de points sources de lumière virtuels cibles étant différents les uns des autres,

**caractérisé en ce que** le premier module de détermination comprend :

un premier sous-module de détermination configuré pour déterminer pour chaque sous-image de la première image un pixel associé de chaque pixel dans la sous-image pour obtenir un ensemble de pixels associés de la sous-image ; et

un deuxième sous-module de détermination configuré pour déterminer les M premiers pixels de l'ensemble de pixels associés qui apparaissent le plus fréquemment afin de former l'ensemble de points sources de lumière virtuels d'origine de la sous-image, où M est un nombre entier supérieur à zéro,

dans lequel le premier sous-module de détermination est en outre configuré pour :

pour chaque pixel dans la sous-image, déterminer le pixel comme premier pixel, et réaliser les opérations suivantes : dans chacune de quatre directions du premier pixel comportant le haut, le bas, la gauche et la droite, déterminer comme deuxième pixel un pixel qui est le plus proche du premier pixel et qui a une profondeur inférieure à une profondeur du premier pixel, la profondeur d'un pixel représentant une distance de profondeur entre une position dans la scène 3D à laquelle correspond un point ayant des coordonnées (x, y) sur une image 2D et une position d'observation, et déterminer comme pixel associé du premier pixel un deuxième pixel ayant une profondeur minimale parmi les deuxièmes pixels respectivement déterminés dans les quatre directions ; et

combiner les pixels associés de tous les pixels dans la sous-image de l'ensemble de pixels associés de la sous-image, dans lequel l'ensemble de pixels associés comporte des pixels associés répétés.

10. Support de stockage stockant un programme informatique qui, lorsqu'il est exécuté par un ordinateur, amène l'ordinateur à mettre en œuvre le procédé selon l'une des revendications 1 à 8 .

11. Dispositif électronique, comprenant :

une mémoire stockant un programme informatique ; et
un processeur configurée pour exécuter le programme informatique pour mettre en œuvre le procédé selon l'une des revendications 1 à 8.

12. Produit de programme informatique qui, lorsqu'il est exécuté par un ordinateur, amène l'ordinateur à mettre en œuvre le procédé selon l'une des revendications 1 à 8.

Obtain a first picture at a target viewing angle from a
virtual three-dimensional scene, where the first picture
includes a virtual object to be subject to illumination
rendering in the virtual three-dimensional scene at the
target viewing angle

*S102*

Determine a target virtual light source point set used for
performing illumination rendering on the virtual object in
the first picture

*S104*

Perform illumination rendering on the virtual object in the
first picture according to the target virtual light source point
set

*S106*

Server 112

Database 114

Processing engine
116

*102* User device 104

Memory 106

Processor
108

Network
110

FIG. 1

Obtain a first picture at a target viewing angle from a virtual three-dimensional scene, where the first picture includes a virtual object to be subject to illumination rendering in the virtual three-dimensional scene at the target viewing angle ~S202

Determine a target virtual light source point set used for performing illumination rendering on the virtual object in the first picture ~S204

Perform illumination rendering on the virtual object in the first picture according to the target virtual light source point set ~S206

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015325041 A1

**Non-patent literature cited in the description**

- **LAINE et al.** *Incremental Instant Radiosity for Real-Time Indirect Illumination*